# EUROPÄISCHE PATENTSCHRIFT

(11) **EP 2 433 483 B1**
(45) Veröffentlichungstag und Bekanntmachung des Hinweises auf die Patenterteilung: **27.11.2019**
(21) Anmeldenummer: 11001674.8
(22) Anmeldetag: 01.03.2011
(51) Int. Cl.: A01B 73/02, A01D 75/18, A01D 78/10

(54) **Sicherheitseinrichtung für Anbaugeräte der Landtechnik**
Safety device for agricultural extension devices
Dispositif de sécurité pour appareils de montage issus de la technique agricole

(30) Priorität: 27.09.2010 DE 102010046572
(43) Veröffentlichungstag der Anmeldung: 28.03.2012
(73) Patentinhaber: CLAAS Saulgau GmbH, 88348 Bad Saulgau (DE)
(72) Erfinder: Menz, Thomas, 88524 Uttenweiler (DE)

(56) Entgegenhaltungen:
- DE-A1- 4 110 265
- DE-A1- 10 120 845
- DE-A1-102006 027 814
- DE-A1-102007 026 280

## Beschreibung

Die Erfindung betrifft eine Sicherheitseinrichtung für Anbaugeräte der Landtechnik und ein Verfahren zum Betreiben der Sicherheitseinrichtung nach den Merkmalen der Ansprüche 1 und 4.

### Stand der Technik

DE 10 2007 026 280 A1 offenbart ein gezogenes landwirtschaftliches Arbeitsgerät mit großer Arbeitsbreite mit verschwenkbaren Seitenrahmen, wobei zumindest ein Sensor zum Erfassen einer Endposition der Seitenrahmen und/oder eines Mittelrahmens in der Endposition vorgesehen ist und bei Erfassen der Endposition ein motorisches Stellelement zum Verschwenken der Rahmen abgeschaltet wird.

Nach bekanntem Stand der Technik werden insbesondere einfache Futtererntemaschinen, die ohne Elektronik ausgerüstet sind, mit einfachen mechanischen Riegeln von Sicherheitsverriegelungen ausgestattet, die zum Entriegeln mit einem Seilzug betätigt werden. Diese Betätigung über den Seilzug ist für den Fahrer meist sehr aufwendig, da er sich zum Ziehen des Seils nach hinten drehen muss, das Seil fassen und dann mit entsprechender Kraft ziehen muss. Dazu wird häufig die Heckscheibe der Kabine geöffnet, was zur Kollision mit der Maschine während des Klappvorgangs führen kann.

Bei Großmaschinen sind diese Riegel oftmals über einen Hydraulikzylinder angesteuert. Dazu ist in der Regel eine elektrohydraulische Steuerung nötig, die bei kleineren Maschinen zu kostenaufwendig ist. Bei diesen Großmaschinen werden teilweise auch elektrisch betätigte Sitzventile als hydraulisches Absperrorgan verwendet, was wiederum eine Steuerung benötigt.

Auch eine rein hydraulische Verriegelung mit entsperrbaren Zwillingsrückschlagventilen ist praktikabel und entsprechend dem Stand der Technik. Diese Zwillingsrückschlagventile öffnen allerdings, wenn an dem Anschluss zum Auseinanderfalten Druck anliegt. Dadurch besteht die Gefahr, dass bei unbeabsichtigtem Betätigen des Hydraulikventils die Maschine auseinanderfaltet Deshalb ist in diesen Maschinen ein hydraulischer Blockkugelhahn verbaut, der vom Bediener zum Transport und zum Abstellen geschlossen werden muss. Da der Bediener zum Schließen des Blockkugelhahns häufig absteigen muss, ist dies eher unkomfortabel.

Die Nachteile dieses Standes der Technik können somit wie folgt angegeben werden: Wie zuvor beschrieben ist meist eine mechanische Verriegelung gegeben, die den Nachteil hat, dass sie unkomfortabel zu bedienen ist. Weiterhin ist diese Verriegelung durch festbinden des Zugseils leicht zu überwinden. Weiterhin muss in den meisten Fällen zuerst hydraulisch zusammengefaltet werden, damit die Verriegelung spannungsfrei und damit die Seilkraft in erträglichem Rahmen kleiner als 250N ist. Außerdem müssen bei doppeltwirkenden Zylindern, die insbesondere bei großen Arbeitsbreiten genutzt werden, stabile Riegel verwendet werden, damit in der Maschine kein Folgeschaden entsteht, wenn das schlepperseilige Ventil betätigt wird ohne dass der Seilzug gezogen wird. Dadurch wird diese mechanische Verriegelung reichlich überdimensioniert, welches aufwendig und kostenintensiv ist. Auch die Lösungen, die Elektrik oder Elektronik benötigen, sind nur bei Maschinen rentabel, bei denen noch andere Funktionen mit der Elektronik überwacht werden und somit sowieso eine Elektronik nötig ist.

### Aufgabenstellung

Hier setzt die Aufgabe der Erfindung an mit dem Ziel, eine einfache, zuverlässige und komfortable Lösung zur Verbesserung von Transportverriegelungen für angebaute landwirtschaftliche Maschinen vorzuschlagen.

### Lösung der Aufgabe

Gelöst wird die Aufgabe der Erfindung mit den kennzeichnenden Merkmalen der unabhängigen Ansprüche 1 und 4. Weitere vorteilhafte Ausgestaltungen der Erfindung sind den abhängigen Ansprüchen, der Beschreibung und den Figurendarstellungen zu entnehmen.
Die Erfindung betrifft ein Verfahren zum Betreibeneiner Sicherheitseinrichtung und eine Sicherheitseinrichtung für einen hydraulischen Arbeitskreislauf zur Betätigung von Falt- oder Klappmechanismen landwirtschaftlicher Anbaugeräte für den Heck- oder Frontanbau an einen Traktor zum Überführen von einer Transportstellung in eine Arbeitsstellung. Es handelt sich dabei um eine Sicherheitseinrichtung in Verbindung mit einem mechanisch betätigten Vorschaltventil im hydraulischen Arbeitskreislauf, welches nach dem Prinzip der zwangsläufigen mechanischen Wechselwirkung infolge des Überführens des Anbaugerätes von einer bodennahen Arbeits-. oder Zwischenstellung in eine bodenferne Transportstellung aus einer Durchflussstellung 39 in eine Sperrstellung und umgekehrt umgeschaltet werden kann.
Die Erfindung bezieht sich somit auf ein Verfahren zum Betreiben einer Sicherheitseinrichtung und eine Sicherheitseinrichtung, ausgeführt als Sicherheitseinrichtung für einen hydraulischen Arbeitskreislauf, zum

Überführen landwirtschaftlicher Anbaugeräte von einer Arbeits- in eine Transportstellung und umgekehrt für die Heck- oder Front-Dreipunkthydraulik von Traktoren. Realisiert wird diese Sicherheitseinrichtung, indem diese ein mechanisch betätigtes Sperrventil als Vorschaltventil aufweist, welches nach dem Prinzip der zwangsläufigen mechanischen Wechselwirkung infolge des Abhebens des Anbaugerätes von der Aufstandsfläche der Räder des Traktors in eine Sperrstellung den hydraulischen Arbeitskreislauf zum Betätigen von Maschinenteilen, welche für den Transport in eine gesicherte Transportstellung verbracht werden müssen, für den Durchfluss automatisch absperrt und der hydraulische Energiefluss dadurch unterbrochen wird.

Bei der Umkehrung dieses Vorgangs wird dabei das Sperrventil ebenfalls nach dem Prinzip der zwangsläufigen mechanischen Wechselwirkung infolge des Absenkens und des Bodenkontaktes des Anbaugerätes automatisch wieder in eine Durchgangsstellung für den hydraulischen Energiefluss frei geschaltet. Dieses hat zur Folge, dass in Abhängigkeit der Schaltstellung des Sperrventils der Sicherheitseinrichtung weitere Schaltventile zur Auslösung von Klapp- oder Schwenkbewegungen von Maschinenteilen, welche für den Transport in eine gesicherte Transportstellung verbracht werden müssen, entweder gesperrt oder zur Ausführung eines Steuerbefehls frei gegeben werden.

Diese Erfindung bezieht sich insbesondere auf am Dreipunkt von Schleppern angebaute Landmaschinen, die zum Transport über das Dreipunktgestänge ausgehoben werden und über Hydraulikzylinder von einer Arbeits in eine Transportstellung überführt werden, wobei in Transportstellung die Maschine wesentlich schmaler ist als in Arbeitsstellung. Dabei ist die Erfindung dazu vorgesehen, dass die Maschine nicht ungewollt von der Transportstellung in die Arbeitsstellung oder einer Stellung dazwischen überführt werden kann. Dazu wird eine Bewegung beim Ausheben des Dreipunktgestänges genutzt, ein zusätzliches Sperrventil, vorzugsweise ein stößelbetätigtes Sitzventil als Vorschaltventil, zu schließen. Dieses Vorschaltventil in Verbindung mit zusätzlichen Rückschlagventilen, den sogenannten entsperrbaren Zwillingsrückschlagventilen, bietet die Sicherheit, dass die Maschine nicht während der Transportfahrt ungewollt auseinanderfaltet und in den Gegenverkehr hineinragt. Auch bei einem Schlauchbruch entstehen dabei keine ungewollten Faltbewegungen. Damit ist eine sichere und komfortable kostengünstige maximale Sicherheitslösung gegeben, wobei das Vorschaltventil auch noch mit einem weiteren Rückschlagventil versehen sein kann, so dass die Maschine immer von der Arbeitsstellung in die Transportstellung gefaltet werden kann, jedoch nicht im ausgehobenen Zustand von der Transportstellung in die Arbeitsstellung zurück gefaltet werden kann.

Dazu muss der Bediener zunächst die angebaute Maschine in die Arbeitsstellung durch Absenken des Dreipunktbocks auf den Boden abstellen, damit das zusätzliche Sperrventil durch die Stößelbetätigung freigeschaltet werden kann und der Faltvorgang in Gang gesetzt werden kann. Dabei ist es von geringer Bedeutung ob die Betätigung des Ventils durch die Umlagerung von Zug auf Druck vom Oberlenker oder vom Unterlenker ausgeführt wird.

Die Erfindung wird beispielhaft an hand eines Ausführungsbeispiels und den nachfolgenden Figurendarstellungen näher erläutert und sie ist dabei keineswegs auf dieses Ausführungsbeispiel beschränkt. Vielmehr kann diese gleichermaßen auf Anbaugeräte anderer Maschinengattungen der Landwirtschaft, welche für den Transport im öffentlichen Straßenverkehr vorgehen sind, und bei denen eine breite Arbeitsstellung in eine schmalere Transportstellung überführt werden muss, angewandt werden.

### Ausführungsbeispiel

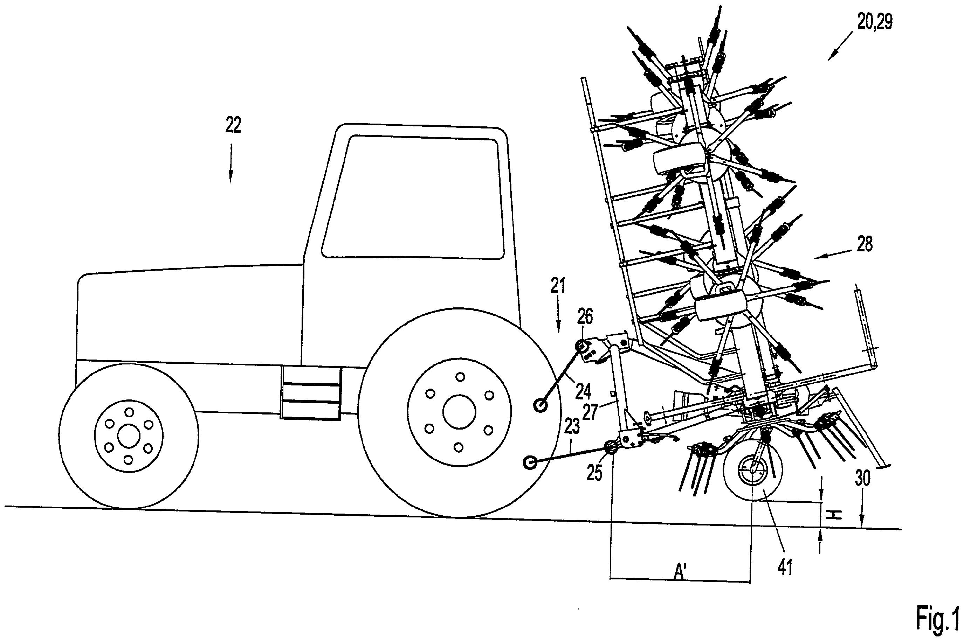

Fig.1 zeigt ein an die Dreipunkthydraulik 21 eines Traktors 22 gekoppeltes Anbaugerät 20 am Beispiel einer Heuwerbungsmaschine, welche dem Fachmann bekannt ist unter dem Begriff Kreiselzetter. Das Anbaugerät 20 befindet sich in der zusammengeklappten Transportstellung 29 , da es vom Boden 30 abgehoben ist und keinen Kontakt zum Boden 30 hat.

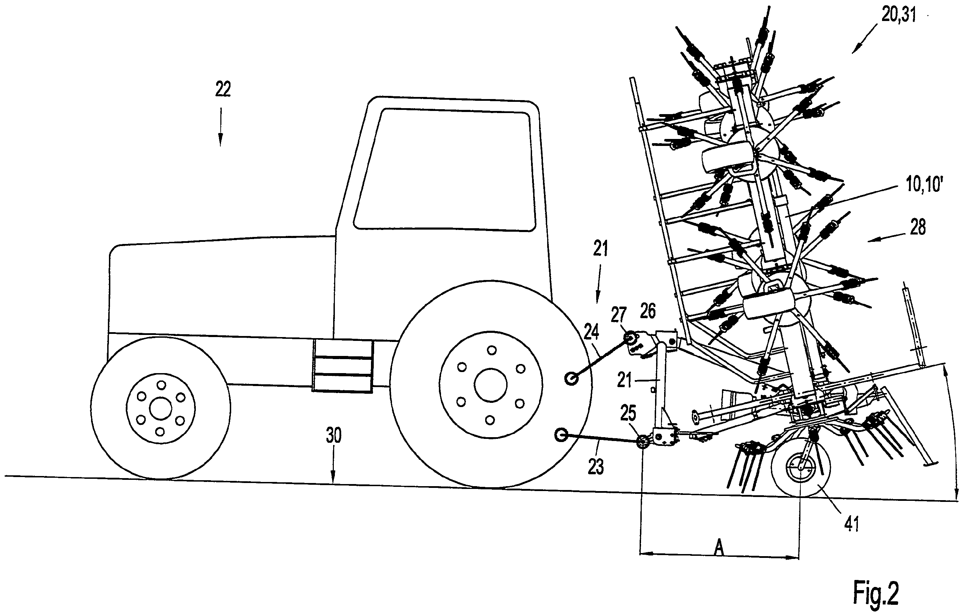

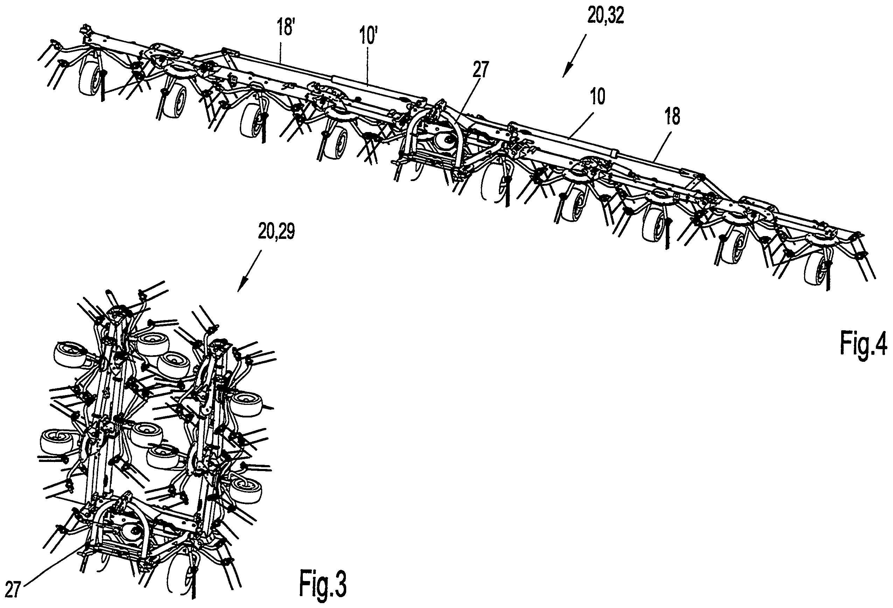

Fig.2 zeigt das gleiche Anbaugerät 20 in einer Zwischenstellung 31, zwar noch in der zusammengeklappten Transportstellung 29, aber in der auf den Boden 30 abgesetzten Stellung, d.h. die Räder befinden sich in Kontakt mit dem Boden 30. Dabei ist das Anbaugerät 20 aber noch nicht in seine Arbeitsstellung 32 auseinander gefaltet. Die Arbeitsstellung 32 ist in Fig. 4 perspektivisch dargestellt.
Fig.3 zeigt das gleiche Anbaugerät 20, nämlich den Kreiselzetter, in zusammengeklappter Transportstellung 29, jedoch ohne Traktor und Fig. 4 zeigt das gleiche Anbaugerät 20 in einer auseinander gefalteten bzw. auseinander geklappten Arbeitsstellung 32, mit Bodenkontakt, aber ebenfalls ohne Traktor.

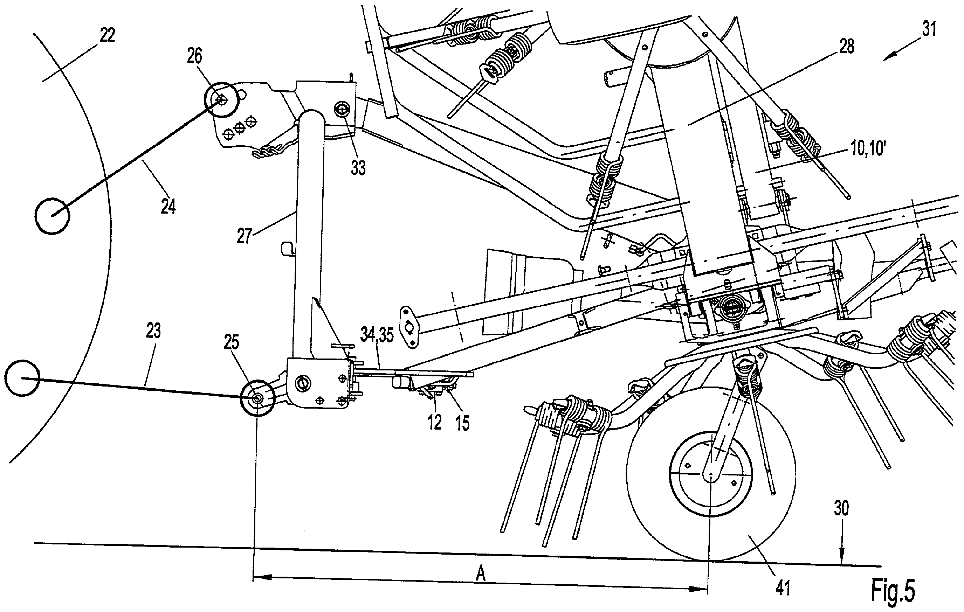

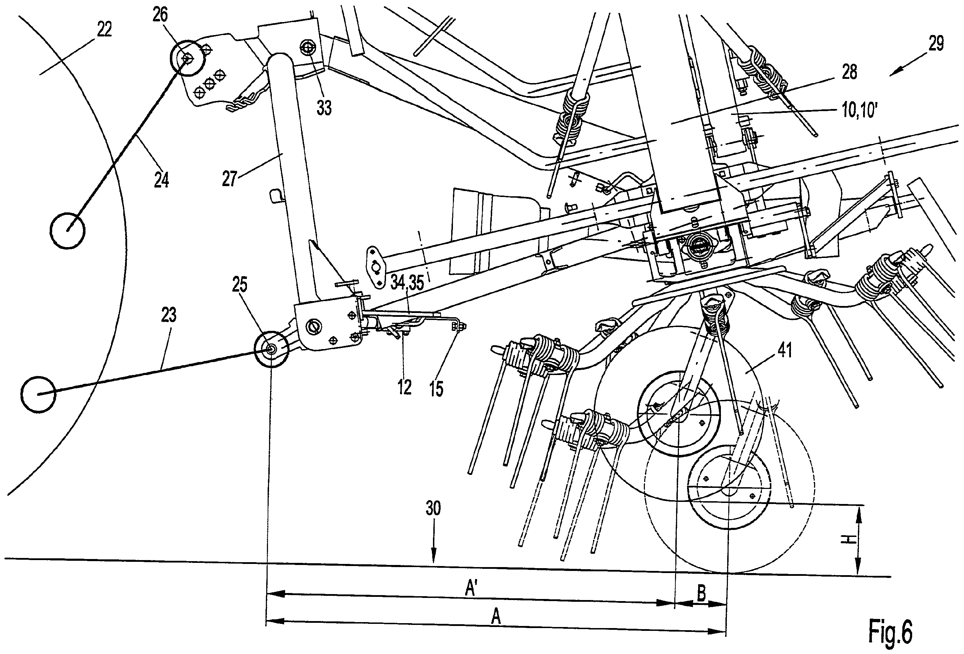

Fig.5 zeigt einen vergrößerten Ausschnitt aus Fig. 2, nämlich den unteren Teil des Anbaugerätes 20 mit Bodenkontakt und Fig. 6 zeigt einen vergrößerten Ausschnitt aus Fig. 1, nämlich den unteren Teil des Anbaugerätes 20 mit Abstand H zum Boden 30 und damit ohne Bodenkontakt.

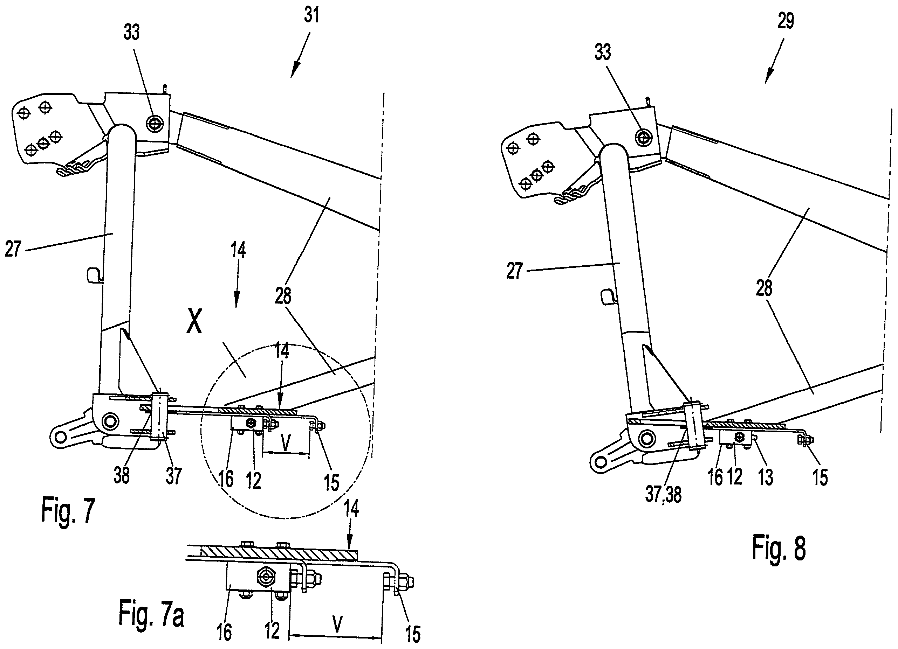

Fig.7 und Fig.8 zeigen eine Schichtaufnahme durch die vertikale Längsmittelebenen des Anbaugerätes 20 analog Fig.1 und Fig.2, wobei Fig.7 einen vergrößerten Ausschnitt analog der Darstellungsweise Fig. 5, nämlich den unteren Teil des Anbaugerätes 20 mit Bodenkontakt, und wobei Fig.8 einen vergrößerten Ausschnitt analog der Darstellungsweise Fig.6, nämlich den unteren Teil des Anbaugerätes 20 mit Abstand H zum Boden 30 darstellt. Es geht dabei insbesondere um die Darstellung und Anordnung des Vorschaltventils 12 und dessen Betätigungsmechanismus 14 mit der dazugehörigen Steuerfahne 15, welche den Kern der Sicherheitseinrichtung 1 darstellt. Fig. 7a zeigt einen vergrößerten Ausschnitt gemäß Einzelheit X der Fig. 7, Fig. 9 und Fig. 10 zeigen den hydraulischen Schaltplan der Sicherheitseinrichtung 1

In dem zusammengeklappten Zustand des Anbaugerätes 20 gemäß Fig. 1 ist durch die Sicherheitseinrichtung 1 verhindert, dass durch einen unbeabsichtigten Steuerbefehl aus der Kabine des Traktors 22, ausgehend von dem Steuergerät 5, das Anbaugerät 20 gemäß der Darstellung der Fig. 4 auseinander geklappt bzw. auseinander gefaltet werden kann.

Dieses ergibt sich dadurch, indem eine Relativbewegung zwischen zwei Maschinenteilen, nämlich dem Tragbock 27, welcher die Anbauvorrichtung zum Anschluss des Anbaugeräts 20 an die Dreipunkt-Hydraulik ist, und dem an diesem angeschlossenen Maschinengestell 28 genutzt wird, ein Vorsteuerventil 12 nach dem Prinzip der zwangsläufigen mechanischen Wechselwirkung zu betätigen. Bedingt durch den Inneren Aufbau des Anbaugerätes 20 verändert sich das Abstandsmass A zwischen dem Tast- und Stützrad 41 und dem Unterlenkeranschlusspunkt 25. Dieses geht aus dem Vergleich zwischen Fig.1 und Fig.2 sowie Fig.5 und Fig.6 bzw. den Figuren Fig.7 und Fig.8 hervor. Es handelt sich demnach um die Nutzung der Lageveränderung vom Tragbock 27 und Maschinengestell 28 zueinander.

Der Tragbock 27 ist in den beiden Unterlenkeranschlusspunkten 25 und im Oberlenkeranschlusspunkt 26 aufgenommen. Unterlenker 23 und Oberlenker 24 bilden bekanntlich gemeinsam ein Viergelenk, welches von dem Dreipunkthubwerk des Traktors betätigt wird. Durch das Anheben der Unterlenker 23 bewegt sich der Tragbock 27 auf einer nichtlinearen Bahn, so dass der Tragbock 27 im Zuge des Anhebens sich in Fahrtrichtung nach vorne neigt.

Der Tragbock 27 ist im Gelenkpunkt 33 mit dem restlichen Teil des Anbaugerätes, nämlich mit dem eigentlichen Maschinengestell 28, gelenkig verbunden und im unteren Bereich etwa auf der horizontalen Ebene der Unterlenkeranschlusspunkte 25 in einer Langlochführung 34 mit dem Maschinengestell 28 verbunden. Dieses dient dazu, dem Anbaugerät 20 in der Arbeitstellung 32 den erforderlichen Freiheitsgrad der Horizontalbewegung zur Anpassung des Anbaugerätes 20 an den Bodenhorizont unabhängig vom Traktor 22 zu gewähren.

Die Langlochführung 34 besteht aus einer Grundplatte 35 mit einem Langloch 36, in der sich ein Bolzen 37, der fest mit dem Tragbock 27 verbunden ist, in der vertikalen Ebene verschieblich bewegen kann. Somit kann sich das gesamte Maschinengestell 28 relativ zum Tragbock 27 beim Anheben vom Boden 30 um beispielsweise einen Abstand H unter Einfluss der Scherkraft um den Gelenkpunkt 33 verschwenken, welches zur Folge hat, dass sich in der Transportstellung 29 das Abstandsmaß A' gegenüber dem Abstandsmaß A in der Zwischenstellung 31 um den Betrag B verkleinert.

Infolge dieses Freiheitsgrades der Schwenk- bzw. Drehbewegung um den Gelenkpunkt 33 kann somit das gesamte Maschinengestell 28 beim Anheben des Anbaugeräts 20 vom Boden 30 seine Lage relativ zum Tragbock 27 verändern. Im ausgehobenen und vom Boden 30 abgehobenen Zustand nimmt das Abstandsmass A' sein Minimum an, während im auf den Boden abgesetzten Zustand des Anbaugerätes gemäß Fig. 2 sich das Abstandsmass A' um dem Betrag B auf das Abstandsmass A wieder vergrößert und somit sein Maximum annimmt.

An der Grundplatte 35 und damit an dem Maschinengestell 28 ist ein federzentriertes Vorsteuerventil 12, ausgebildet als 2/2-Wegeventil mit Stößelbetätigung 13 angeschraubt. Fig.7a zeigt eine Vergrößerung dieser Zusammenhänge in der Einzelheit X aus Fig.7.

Die Steuerfahne 15 als Betätigungselement des Ventilstößels 13 ist in einer Linearführung zwischen der Grundplatte 35 und dem Ventilgehäuse 16 des Vorsteuerventils 12 geführt.

Es besteht eine Mitnehmerverbindung 38 zwischen dem Bolzen 37 als Teil des Tragbocks 27 und der Steuerfahne 15, so dass bei Ausführung der Relativbewegung als Drehbewegung zwischen Tragbock 27 und Maschinengestell 28 die Steuerfahne 15 innerhalb der Führung eine Verschiebebewegung V ausführt.

Mit der Stellschraube 17 als Teil der Steuerfahne 15 kann eine Feineinstellung des Endpunktes der Verschiebebewegung V in Richtung des Vorsteuerventils 12 vorgenommen werden. Die Veränderung des Abstandsmasses A wird also indirekt durch die Lageveränderung zwischen Tragbock 27 und Maschinengestell 28 genutzt, um an der Steuerfahne 15 die Verschiebebewegung V zu erzeugen.

Damit kann der Ventilstößel 13 des Vorsteuerventils 12 lageabhängig von der Transport- 29 oder Zwischenstellung 31 bzw. Arbeitsstellung 32 betätigt werden, welches bedeutet, dass davon abhängig das Vorsteuerventil 12 in Sperrstellung oder Durchflussstellung geschaltet werden kann. Im nicht betätigten Zustand geht das Vorsteuerventil 12 infolge der Federkraft in die Sperrstellung über, im betätigten Zustand in die frei geschaltete Durchflussstellung.

Die Sperrstellung des Vorsteuerventils 12 in der Transportstellung 29 des Anbaugeräts verhindert somit, dass die Kolbenstangen 18,18' der Hydraulikzylinder 10,10' zur Betätigung des Klapp- bzw. Faltmechanismus des Anbaugerätes 20 während der Transportfahrt durch eine Fehlbedienung des Steuergeräts 5 vom Fahrer in Richtung der Ausklappbewegung betätigt werden können. Ein Ausklappen von Maschinenteilen in den Verkehrsraum, der über das Straßentransportprofil hinausragt, ist damit inhärent sicher unterbunden.

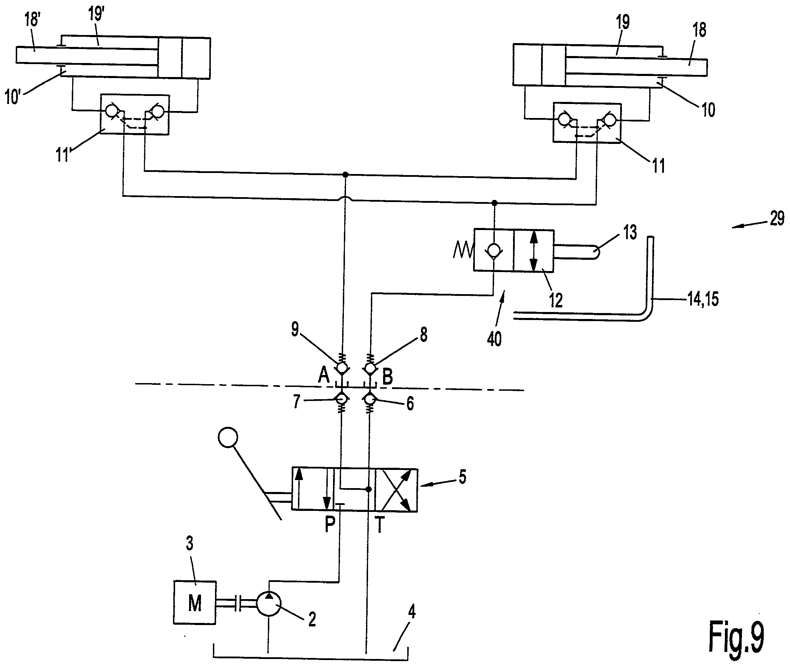

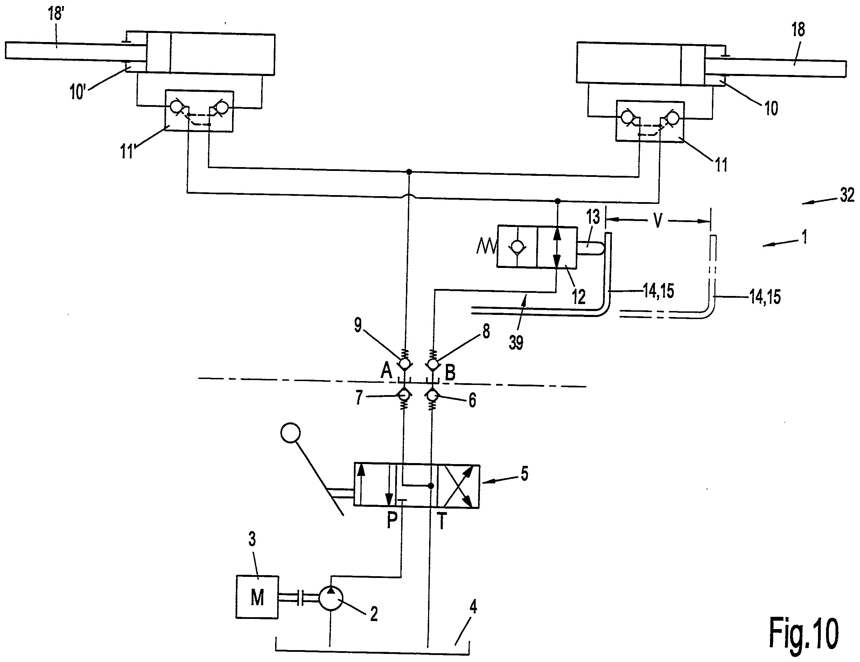

In den Figuren Fig. 9 und Fig.10 ist ein Ausführungsbeispiel eines hydraulischen Schaltplans einer erfindungsgemäßen Sicherheitseinrichtung 1 dargestellt, wobei diese Lösung nur beispielhaft für weitere Lösungsmöglichkeiten angesehen wird. Ausgehend von der Bordhydraulik eines Traktors, im Wesentlichen bestehend aus einer Hydraulikpumpe 2, welche vom Traktormotor 3 angetrieben wird, einem Hydrauliköltank 4, einem Steuergerät 5 als mindestens 4-3-Wegeventil, ist die hydraulische Betätigungseinrichtung, nämlich die Hydraulikzylinder 10,10' zum Ein- oder Ausklappen von Maschinenteilen des Anbaugerätes 20 über die Kupplungsmuffen 6,7 und Kupplungsstecker 8,9 mit der Druckleitung P und der Tankrücklaufleitung T verbunden. In dem dargestellten Ausführungsbeispiel ist das Vorschaltventil 12, ausgeführt als 2/2-Wegeventil, in der Leitung des Arbeitskreislaufs der Hydraulik zwischen dem Steuergerät 5 und dem Kolbenstangendruckraum 19 der Hydraulikzylinder 10,10' eingebaut. Dieses beinhaltet den zusätzlichen Vorteil, dass der Kolbenstangendruckraum 19 auch in der Sperrstellung der Transportfahrt ansteuerbar ist und ggf. die Kolbenstangen auch dann noch in ihre Endstellung einfahren können, falls dieser Vorgang vorzeitig abgebrochen worden sein sollte. Die Kolbenstangen beider Hydraulikzylinder 10,10' werden bei Nichtbetätigung zusätzlich durch die entsperrbaren Zwillingsrückschlagventile 11,11' eingespannt. Das Vorschaltventil ist in der Sperrstellung zugleich als eigensicheres Sitz- und Rückschlagventil ausgebildet, so dass es sich bei dieser Ausgestaltung in Verbindung mit den Zwillingsrückschlagventilen 11,11' zugleich um eine redundante Lösung im Sinne einer hydraulischen Verriegelung handelt. Die Ansteuerung des Vorschaltventils 12 erfolgt über den Betätigungsmechanismus 14 abhängig von der Arbeits- 32 bzw. Transportstellung 29 mittels der Steuerfahne 15 als Stößelbetätigung. Es handelt sich dabei um eine Direktbetätigung auf der Basis der mechanischen Koppelung.

Fig. 9 zeigt den Schaltplan der Hydraulik im Schaltzustand der Transportstellung 29 mit eingefahrenen Kolbenstangen 18,18' und Fig.10 im Schaltzustand der. Arbeitsstellung 32 mit ausgefahrenen Kolbenstangen 18,18'. Das Prinzip der zwangsläufigen mechanischen Wechselwirkung infolge des Abhebens des Anbaugerätes vom Boden von einer Durchflussstellung in eine Sperrstellung ist nicht an dieses Ausführungsbeispiel gebunden, sondern es kann beispielsweise auch anderweitig realisiert werden, beispielsweise in Verbindung mit einem Blockkugelhahn, dessen Schalthebel über ein mechanisch betätigtes Gestänge mit dem Maschinenrahmen in analoger weise gekoppelt ist.

In dem dargelegten Ausführungsbeispiel ist das Vorsteuerventil 12 Teil des Maschinengestells 28. Selbstverständlich ist es auch möglich, dieses als Teil des Tragbocks auszuführen. Erfindungswesentlich ist lediglich, dass das Vorsteuerventil 12 in Abhängigkeit von der bodennahen und bodenfernen Lage des Anbaugerätes in Folge davon ausgelöst Relativbewegungen von Maschinenteilen innerhalb Anbaugerätes mechanisch betätigt geschaltet wird. dem Prinzip der zwangsläufigen mechanischen Wechselwirkung infolge des Überführens des Anbaugerätes 20 von einer bodennahen Arbeits- 32 oder Zwischenstellung 31 in eine bodenferne Transportstellung 29 von einer Durchflussstellung 39 in eine Sperrstellung 40 umgeschaltet werden kann.

Selbstverständlich ist es auch möglich in Abhängigkeit der Schaltstellung, Sperrstellung 40 oder Durchflussstellung 39 des Vorschaltventils 12, weitere nachfolgende Schaltventile in den Energiefluss des hydraulischen Arbeitskreislaufs ein oder auszukoppeln, um damit weitere Steuerbefehle von der bodennahen oder bodenfernen Lage des Anbaugerätes abhängig zu machen.

### Bezugszeichenliste

- 1: Sicherheitseinrichtung
- 2: Hydraulikpumpe
- 3: Traktormotor
- 4: Hydrauliköltank
- 5: Steuergerät (Wegeventil)
- 6: Kupplungsmuffe
- 7: Kupplungsmuffe
- 8: Kupplungsstecker
- 10,10': Hydraulikzylinder, Klappzylinder
- 11,11': entsperrbares Zwillingsrückschlagventil
- 12: Vorsteuerventil, Vorschaltventil
- 13: Stößelbetätigung, Ventilstößel
- 14: Betätigungsmechanismus
- 15: Steuerfahne
- 16: Ventilgehäuse
- 17: Stellschraube
- 18,18': Kolbenstangen
- 19,19: Kolbenstangendruckraum
- 20: Anbaugerät, Kreiselzetter
- 21: Dreipunkthydraulik
- 22: Traktor
- 23: Unterlenker
- 24: Oberlenker
- 25: Unterlenkeranschlusspunkt
- 26: Oberlenkeranschlusspunkt
- 27: Tragbock, Anbauvorrichtung
- 28: Maschinengestell
- 29: Transportstellung
- 30: Boden
- 31: Zwischenstellung
- 32: Arbeitsstellung
- 33: Gelenkpunkt
- 34: Langlochführung
- 35: Grundplatte
- 36: Langloch
- 37: Bolzen
- 38: Mitnehmerverbindung
- 39: Durchflussstellung
- 40: Sperrstellung
- 41: Tast- und Stützrad
- A,A': Abstandsmaß
- B: Betrag
- H: Betrag
- V: Verschiebebewegung
- P: Druckleitung
- T: Tankrücklaufleitung

## Patentansprüche

1. Verfahren zum Betreiben einer Sicherheitseinrichtung für einen hydraulischen Arbeitskreislauf zur Betätigung von Falt- oder Klappmechanismen landwirtschaftlicher Anbaugeräte für den Heck- oder Frontanbau an einen Traktor zum Überführen von einer Transportstellung (29) in eine Arbeitsstellung (32) und umgekehrt, **dadurch gekennzeichnet, dass** die Sicherheitseinrichtung (1) ein mechanisch betätigtes Vorschaltventil (12) im hydraulischen Arbeitskreislauf aufweist, welches nach dem Prinzip einer zwangsläufigen mechanischen Wechselwirkung infolge eines Abhebens des Anbaugerätes von der Aufstandsfläche der Räder des Traktors in eine Sperrstellung schaltet und den hydraulischen Arbeitskreislauf zum Betätigen von Maschinenteilen, welche für den Transport in eine gesicherte Transportstellung verbracht werden müssen, für den Durchfluss automatisch absperrt, wodurch der hydraulische Energiefluss unterbrochen wird, und bei Umkehrung dieses Vorganges infolge eines Absenkens und bei Bodenkontakt des Anbaugerätes automatisch in eine Durchgangstellung schaltet und den hydraulischen Energiefluss frei schaltet.

2. Verfahren nach Anspruch 1, **dadurch gekennzeichnet, dass** das Vorschaltventil (12) infolge des Absenkens des Anbaugeräts (20) aus der bodenfernen Transportstellung (29) in eine bodennahe Arbeits- (32) oder Zwischenstellung (31) des Anbaugerätes (20) nach dem Prinzip der zwangsläufigen mechanischen Wechselwirkung aus einer Sperrstellung (40) in eine Durchflussstellung (39) umgeschaltet wird.

3. Verfahren nach Anspruch 1 und 2, **dadurch gekennzeichnet, dass** in Abhängigkeit der Schaltstellung, Sperrstellung (40) oder Durchflussstellung (39) des Vorschaltventils (12), weitere nachfolgende Schaltventile in den Energiefluss des hydraulischen Arbeitskreislaufs eingekoppelt oder ausgekoppelt werden können.

4. Sicherheitseinrichtung für einen hydraulischen Arbeitskreislauf zur Betätigung von Falt- oder Klappmechanismen landwirtschaftlicher Anbaugeräte für den Heck- oder Frontanbau an einen Traktor zum Überführen von einer Transportstellung in eine Arbeitsstellung und umgekehrt, **dadurch gekennzeichnet, dass** die Sicherheitseinrichtung (1) ein mechanisch betätigtes Vorschaltventil (12) im hydraulischen Arbeitskreislauf aufweist, welches eine Durchflussstellung (39) und eine Sperrstellung (40) aufweist und welches nach dem Prinzip der zwangsläufigen mechanischen Wechselwirkung infolge eines Abhebens des Anbaugerätes von der Aufstandsfläche der Räder des Traktors in eine Sperrstellung schaltet und den hydraulischen Arbeitskreislauf zum Betätigen von Maschinenteilen, welche für den Transport in eine gesicherte Transportstellung verbracht werden müssen, für den Durchfluss automatisch absperrt, wodurch der hydraulische Energiefluss unterbrochen wird, und bei Umkehrung dieses Vorganges infolge eines Absenkens und bei Bodenkontakt des Anbaugerätes automatisch in eine Durchgangstellung schaltet und den hydraulischen Energiefluss frei schaltet.

5. Vorrichtung nach Anspruch 4, **dadurch gekennzeichnet, dass** die zwangsläufige mechanische Wechselwirkung ursächlich von einer relativen Lageveränderung zwischen Tragbock (27) und Maschinengestell (28) hervorgerufen wird.

6. Vorrichtung nach Anspruch 4, **dadurch gekennzeichnet, dass** das Vorschaltventil (12) Teil des Maschinengestells (28) ist.

7. Vorrichtung nach Anspruch 4, **dadurch gekennzeichnet, dass** das Vorschaltventil (12) Teil des Tragbocks (27) ist.

8. Vorrichtung nach Anspruch 4, **dadurch gekennzeichnet, dass** das Vorschaltventil (12) in Abhängigkeit von Relativbewegungen von Maschinenteilen des Anbaugerätes (20) von einer Durchflussstellung (39) in eine Sperrstellung (40) umgeschaltet werden kann.

9. Vorrichtung nach Anspruch 4, **dadurch gekennzeichnet, dass** das Vorschaltventil (12) mit einem weiteren Rückschlagventil ausgestattet ist.

10. Vorrichtung nach Anspruch 4, **dadurch gekennzeichnet, dass** das Vorschaltventil (12) derart in den Arbeitskreislauf integriert ist, dass das Anbaugerät (20) in jeder Stellung von der Arbeitsstellung (32) in die Transportstellung gefaltet bzw. geklappt werden kann, jedoch in der bodenfernen Stellung von der Transportstellung (29) nicht in die Arbeitsstellung (32) zurück gefaltet oder geklappt werden kann.

11. Vorrichtung nach Anspruch 4, **dadurch gekennzeichnet, dass** das Vorschaltventil (12) ein mechanisch direkt betätigtes 2/2-Wegeventil ist.

12. Vorrichtung nach Anspruch 4, **dadurch gekennzeichnet, dass** das Vorschaltventil (12) ein Blockkugelhahn ist.

13. Vorrichtung nach Anspruch 4, **dadurch gekennzeichnet, dass** das Anbaugerät eine Heuwerbungsmaschine ist.

## Claims

1. A method of operating a safety device for a hydraulic working circuit for actuating folding or pivoting mechanisms of agricultural implements for rear or front attachment to a tractor for transfer from a transport position (29) into a working position (32) and vice-versa, **characterised in that** the safety device (1) has a mechanically actuated pilot control valve (12) in the hydraulic working circuit, which in accordance with the principle of an inevitable mechanical interaction as a consequence of lifting of the implement from the surface on which the wheels of the tractor stand switches into a blocking position and automatically blocks off for through-flow the hydraulic working circuit for actuation of machine parts which have to be moved into a secured transport position for transport, whereby the hydraulic energy flow is interrupted and upon reversal of that process as a consequence of lowering and upon contact with the ground of the implement automatically switches into a through-flow position and enables the hydraulic energy flow.

2. A method according to claim 1 **characterised in that** the pilot control valve (12) as a consequence of lowering of the implement (20) from the transport position (29) remote from the ground into a working (32) or intermediate position (31) of the implement (20), near the ground, is switched over from a blocking position (40) into a through-flow position (39) in accordance with the principle of the inevitable mechanical interaction.

3. A method according to claim 1 and claim 2 **characterised in that** in dependence on the switching position, blocking position (40) or through-flow position (39) of the pilot control valve (12), further subsequent switching valves can be coupled into or out of the energy flow of the hydraulic working circuit.

4. A safety device for a hydraulic working circuit for actuating folding or pivoting mechanisms of agricultural implements for rear or front attachment to a tractor for transfer from a transport position (29) into a working position (32) and vice-versa, **characterised in that** the safety device (1) has a mechanically actuated pilot control valve (12) in the hydraulic working circuit, which has a through-flow position (39) and a blocking position (40) and which in accordance with the principle of the inevitable mechanical interaction as a consequence of lifting of the implement from the surface on which the wheels of the tractor stand switches into a blocking position and automatically blocks off for through-flow the hydraulic working circuit for actuation of machine parts which have to be moved into a secured transport position for transport, whereby the hydraulic energy flow is interrupted and upon reversal of that process as a consequence of lowering and upon contact with the ground of the implement automatically switches into a through-flow position and enables the hydraulic energy flow.

5. A device according to claim 4 **characterised in that** the inevitable mechanical interaction is causally brought about by a relative change in position between the support mounting (27) and the machine frame (28).

6. A device according to claim 4 **characterised in that** the pilot control valve (12) is part of the machine frame (28).

7. A device according to claim 4 **characterised in that** the pilot control valve (12) is part of the support mounting (27).

8. A device according to claim 4 **characterised in that** the pilot control valve (12) can be switched over from a through-flow position (39) into a blocking position (40) in dependence on relative movements of machine parts of the implement (20).

9. A device according to claim 4 **characterised in that** the pilot control valve (12) is provided with a further non-return valve.

10. A device according to claim 4 **characterised in that** the pilot control valve (12) is integrated into the working circuit in such a way that the implement (20) can be folded or pivoted in any position from the working position (32) into the transport position but in the position far from the ground it cannot be folded or pivoted back from the transport position (29) into the working position (32).

11. A device according to claim 4 **characterised in that** the pilot control valve (12) is a mechanically directly actuated 2/2-way valve.

12. A device according to claim 4 **characterised in that** the pilot control valve (12) is a block ball valve.

13. A device according to claim 4 **characterised in that** the implement is a hay-making machine.

## Revendications

1. Procédé d'exploitation d'un équipement de sécurité pour un circuit de travail hydraulique destiné à actionner des mécanismes de pliage ou de rabattement d'outils agricoles rapportés aptes à être montés à l'arrière ou à l'avant d'un tracteur, dans le but de les transférer d'une position de transport (29) vers une position de travail (32) et inversement, **caractérisé en ce que** l'équipement de sécurité (1) comporte dans le circuit de travail hydraulique une valve additionnelle actionnée mécaniquement (12) qui, selon le principe d'une interaction mécanique forcée, passe dans une position fermée lorsque l'outil rapporté a décollé de la surface d'appui des roues du tracteur et bloque automatiquement l'écoulement dans le circuit de travail hydraulique destiné à actionner des pièces mécaniques qui, pour le transport, doivent être amenées dans une position de transport sécurisée, ce qui a pour effet d'interrompre le flux d'énergie hydraulique et, en cas d'inversion de cette opération, après que l'outil rapporté est descendu et entré en contact avec le sol, passe automatiquement en position d'écoulement et libère le flux d'énergie hydraulique.

2. Procédé selon la revendication 1, **caractérisé en ce que**, après que l'outil rapporté (20) est descendu de la position de transport (29) éloignée du sol et a adopté une position de travail (32) ou intermédiaire (31) proche du sol, la valve additionnelle (12) est commutée, selon le principe de l'interaction mécanique forcée, d'une position fermée (40) à une position passante (39).

3. Procédé selon la revendication 1 et 2, **caractérisé en ce qu'**en fonction de la position de commutation, position fermée (40) ou position passante (39) de la valve additionnelle (12), d'autres valves de commande consécutives peuvent être couplées ou découplées du flux énergétique du circuit de travail hydraulique.

4. Équipement de sécurité pour un circuit de travail hydraulique destiné à actionner des mécanismes de pliage ou de rabattement d'outils agricoles rapportés aptes à être montés à l'arrière ou à l'avant d'un tracteur, dans le but de les transférer d'une position de transport vers une position de travail et inversement, **caractérisé en ce que** l'équipement de sécurité (1) comporte dans le circuit de travail hydraulique une valve additionnelle actionnée mécaniquement (12) qui possède une position passante (39) et une position fermée (40) et qui, selon le principe d'une interaction mécanique forcée, passe dans une position fermée lorsque l'outil rapporté a décollé de la surface d'appui des roues du tracteur et bloque automatiquement l'écoulement dans le circuit de travail hydraulique destiné à actionner des pièces mécaniques qui, pour le transport, doivent être amenées dans une position de transport sécurisée, ce qui a pour effet d'interrompre le flux d'énergie hydraulique et, en cas d'inversion de cette opération, après que l'outil rapporté est descendu et entré en contact avec le sol, passe automatiquement en position d'écoulement et libère le flux d'énergie hydraulique.

5. Dispositif selon la revendication 4, **caractérisé en ce que** l'interaction mécanique forcée est provoquée initialement par un changement de position relative entre un support (27) et le bâti de machine (28).

6. Dispositif selon la revendication 4, **caractérisé en ce que** la valve additionnelle (12) fait partie du bâti de machine (28).

7. Dispositif selon la revendication 4, **caractérisé en ce que** la valve additionnelle (12) fait partie du support (27).

8. Dispositif selon la revendication 4, **caractérisé en ce que**, en fonction de déplacements relatifs de pièces mécaniques de l'outil rapporté (20), la valve additionnelle (12) peut être commutée d'une position passante (39) vers une position fermée (40) .

9. Dispositif selon la revendication 4, **caractérisé en ce que** la valve additionnelle (12) est équipée d'une autre valve anti-retour.

10. Dispositif selon la revendication 4, **caractérisé en ce que** la valve additionnelle (12) est intégrée dans le circuit de travail de façon que l'outil rapporté (20) puisse être plié, respectivement rabattu dans n'importe quelle position depuis la position de travail (32) vers la position de transport, mais, dans la position éloignée du sol, ne puisse pas être déplié ou rabattu depuis la position de transport (29) vers la position de travail (32).

11. Dispositif selon la revendication 4, **caractérisé en ce que** la valve additionnelle (12) est une valve directionnelle à 2 voies/2 positions à actionnement mécanique direct.

12. Dispositif selon la revendication 4, **caractérisé en ce que** la valve additionnelle (12) est un robinet à boisseau sphérique de bloc.

13. Dispositif selon la revendication 4, **caractérisé en ce que** l'outil rapporté est une machine de fenaison.
